# EUROPEAN PATENT APPLICATION

(11) **EP 4 800 779 A1**
(43) Date of publication of application: **02.09.2026**
(21) Application number: 24923386.7
(22) Date of filing: 17.10.2024
(51) Int. Cl.: H01M 4/64

(54) **NEGATIVE ELECTRODE CURRENT COLLECTOR AND PREPARATION METHOD THEREFOR, BATTERY CELL, BATTERY AND ELECTRIC DEVICE**

(30) Priority: 07.02.2024 CN 202410175537
(71) Applicant: Contemporary Amperex Technology (Hong Kong) Limited, Hong Kong (HK)
(72) Inventor: MA, Li, Ningde, Fujian 352100 (CN); SHAO, Zirui, Ningde, Fujian 352100 (CN); LIN, Wanchun, Ningde, Fujian 352100 (CN); GUAN, Wenhao, Ningde, Fujian 352100 (CN); ZHANG, Shuaiqi, Ningde, Fujian 352100 (CN); JIA, Xurong, Ningde, Fujian 352100 (CN); ZHONG, Wei, Ningde, Fujian 352100 (CN); GE, Xiaoming, Ningde, Fujian 352100 (CN)
(74) Representative: Lorenz Seidler Gossel Part. mbB
(86) International application number: PCT/CN2024/125486
(87) International publication number: WO 2025/167182

(57) **Abstract**

A negative electrode current collector and a preparation method thereof, a battery cell, a battery, and an electric apparatus are provided. The preparation method for a negative electrode current collector includes the following steps: providing a metal substrate, where the metal substrate is a two-dimensional metal structure or a three-dimensional porous metal structure; and irradiating at least part of the surface of the metal substrate with a laser, causing metal grains in a laser ablation heat-affected zone of the metal substrate to melt and recrystallize to form smaller-sized metal grains, thereby obtaining the negative electrode current collector. The reliability and cycling performance of the battery can be improved.

## Description

### CROSS-REFERENCE TO RELATED APPLICATIONS

The present application claims priority to Chinese Patent Application No. 202410175537.5, filed on February 7, 2024, and entitled "NEGATIVE ELECTRODE CURRENT COLLECTOR AND PREPARATION METHOD THEREOF, BATTERY CELL, BATTERY, AND ELECTRIC APPARATUS," which is incorporated herein by reference in its entirety.

### TECHNICAL FIELD

The present application relates to a negative electrode current collector and a preparation method thereof, a battery cell, a battery, and an electric apparatus.

### BACKGROUND

Compared to ionic battery cells, metallic battery cells may have higher energy density. However, unlike the negative electrode of an ionic battery cell, the negative electrode of a metallic battery cell suffers from more severe dendrite issues, thereby affecting their commercialization. The growth of dendrites can cause internal short circuits in the battery cell, affecting the reliability and cycling performance of the battery cell.

### SUMMARY

The present application provides a negative electrode current collector and a preparation method thereof, a battery cell, a battery, and an electric apparatus, which can improve the reliability and cycling performance of the battery.

In a first aspect, the present application provides a preparation method for a negative electrode current collector, including the following steps: providing a metal substrate, where the metal substrate is a two-dimensional metal structure or a three-dimensional porous metal structure; and irradiating at least part of the surface of the metal substrate with a laser, causing metal grains in a laser ablation heat-affected zone of the metal substrate to melt and recrystallize to form smaller-sized metal grains, thereby obtaining the negative electrode current collector.

In the present application, by adjusting the laser irradiation parameters, metal grains in the laser ablation heat-affected zone of the metal substrate can be melted and recrystallized to form smaller metal grains, and the reliability and cycling performance of a battery cell using the negative electrode current collector are improved.

In some embodiments, the laser device generating the laser is a pulsed laser device, the wavelength of the pulsed laser device is 694 nm to 1070 nm, the average power of the laser is 30 W to 90 W, the pulse repetition frequency of the laser is 30 KHz to 90 KHz, and the pulse width of the laser is 20 ns to 120 ns.

In the present application, by adjusting the laser irradiation parameters, metal grains in the laser ablation heat-affected zone are melted and recrystallized to form smaller metal grains. These smaller-sized metal grains form more grain boundary defects and rapidly increase the surface energy of the metal substrate, thereby improving the wettability of metals such as lithium or sodium and the wettability of the electrolyte solution on the surface of the metal substrate. As a result, the nucleation overpotential of the negative electrode current collector can be reduced, dendrite formation can be suppressed, and the reliability and cycling performance of the battery cell can be enhanced. Moreover, laser irradiation can also activate the surface of the negative electrode current collector, thereby increasing the electrochemically active area of the negative electrode current collector and further improving the cycling performance of the battery cell.

In some embodiments, the pulse energy of the pulsed laser device is 1 mJ.

In some embodiments, the pulsed laser device includes one or more of a ruby laser device, a fiber laser device, a glass laser device, or a YAG laser device.

In some embodiments, the wavelength of the pulsed laser device is 1050 nm to 1070 nm.

In some embodiments, the traverse speed of the laser is 1000 mm/s to 3500 mm/s.

In some embodiments, an initial size of the metal grains of the metal substrate is greater than 100 nm; and/or a size of the metal grains formed by recrystallization in the laser ablation heat-affected zone of the metal substrate is 10 nm to 100 nm.

In some embodiments, the metal substrate is a two-dimensional metal structure, and the two-dimensional metal structure has a thickness H1 of 5 µm to 12 µm.

In some embodiments, the metal substrate is a two-dimensional metal structure, and the two-dimensional metal structure is a two-dimensional copper foil, a two-dimensional copper alloy foil, a two-dimensional nickel foil, or a two-dimensional nickel alloy foil.

In some embodiments, the metal substrate is a two-dimensional metal structure, and the average power of the laser is 30 W to 80 W, optionally 40 W to 80 W. When the average power of the laser is within the above range, a relatively large laser ablation heat-affected zone can be formed on the surface of the two-dimensional metal structure without causing overall melting of the two-dimensional metal structure, and metal grains in the laser ablation heat-affected zone can be melted and recrystallized to form smaller-sized metal grains, thereby better improving the reliability and cycling performance of the battery cell.

In some embodiments, the metal substrate is a two-dimensional metal structure, and the pulse repetition frequency of the laser is 30 KHz to 80 KHz, optionally 40 KHz to 80 KHz. When the pulse repetition frequency of the laser is within the above range, a relatively large laser ablation heat-affected zone can be formed on the surface of the two-dimensional metal structure without causing melting of the two-dimensional metal structure, and metal grains in the laser ablation heat-affected zone can be melted and recrystallized to form smaller-sized metal grains, thereby better improving the reliability and cycling performance of the battery cell.

In some embodiments, the metal substrate is a two-dimensional metal structure, and the pulse width of the laser is 40 ns to 120 ns, optionally 60 ns to 120 ns. When the pulse width of the laser is within the above range, a relatively large laser ablation heat-affected zone can be formed on the surface of the two-dimensional metal structure, and metal grains in the laser ablation heat-affected zone can be melted and recrystallized to form smaller-sized metal grains, thereby better improving the reliability and cycling performance of the battery cell.

In some embodiments, the metal substrate is a two-dimensional metal structure, and the defocus amount of the laser is -120 µm to 20 µm, optionally -(H1 × 70%) µm to 0 µm. When the defocus amount of the laser is within the above range, a relatively large laser ablation heat-affected zone can be formed on the surface of the two-dimensional metal structure, and metal grains in the laser ablation heat-affected zone can be melted and recrystallized to form smaller-sized metal grains, thereby better improving the reliability and cycling performance of the battery cell.

In some embodiments, the metal substrate is a three-dimensional porous metal structure, and the three-dimensional porous metal structure has a thickness H2 of 80 µm to 1000 µm.

In some embodiments, the metal substrate is a three-dimensional porous metal structure, and the three-dimensional porous metal structure is mesh copper, mesh nickel, copper foam, or nickel foam.

In some embodiments, the metal substrate is a three-dimensional porous metal structure, and the average power of the laser is 40 W to 90 W, optionally 60 W to 90 W. When the average power of the laser is within the above range, a relatively large laser ablation heat-affected zone can be formed on the surface of the three-dimensional porous metal structure without causing burn-through of some ligaments of the three-dimensional porous metal structure, and metal grains in the laser ablation heat-affected zone can be melted and recrystallized to form smaller-sized metal grains, thereby better improving the reliability and cycling performance of the battery cell.

In some embodiments, the metal substrate is a three-dimensional porous metal structure, and the pulse repetition frequency of the laser is 40 KHz to 90 KHz, optionally 60 KHz to 90 KHz. When the pulse repetition frequency of the laser is within the above range, a relatively large laser ablation heat-affected zone can be formed on the surface of the three-dimensional porous metal structure without causing burn-through of some ligaments of the three-dimensional porous metal structure, and metal grains in the laser ablation heat-affected zone can be melted and recrystallized to form smaller-sized metal grains, thereby better improving the reliability and cycling performance of the battery cell.

In some embodiments, the metal substrate is a three-dimensional porous metal structure, and the pulse width of the laser is 40 ns to 120 ns, optionally 60 ns to 120 ns. When the pulse width of the laser is within the above range, a relatively large laser ablation heat-affected zone can be formed on the surface of the three-dimensional porous metal structure, and metal grains in the laser ablation heat-affected zone can be melted and recrystallized to form smaller-sized metal grains, thereby better improving the reliability and cycling performance of the battery cell.

In some embodiments, the metal substrate is a three-dimensional porous metal structure, and the defocus amount of the laser is -(H2 × 100%) µm to 0, optionally -(H2 × 70%) µm to -(H2 × 50%) µm. When the defocus amount of the laser is within the above range, a relatively large laser ablation heat-affected zone can be formed on the surface of the three-dimensional porous metal structure, and metal grains in the laser ablation heat-affected zone can be melted and recrystallized to form smaller-sized metal grains, thereby better improving the reliability and cycling performance of the battery cell.

In some embodiments, the microstructure morphology of the surface of the negative electrode current collector includes one or more of surface ablation without pore formation, pits, bowl-shaped pores, through-holes, or grooves.

In some embodiments, before irradiating the surface of the metal substrate with a laser, the method further includes the step of: cleaning oil, impurities, and/or oxide layers on the surface of the metal substrate.

In a second aspect, the present application provides a negative electrode current collector, where the negative electrode current collector includes a laser ablation heat-affected zone and a non-laser ablation heat-affected zone, and metal grains in the laser ablation heat-affected zone have a size less than that of metal grains in the non-laser ablation heat-affected zone.

In some embodiments, the metal grains in the laser ablation heat-affected zone have a size of 10 nm to 100 nm; and/or the metal grains in the non-laser ablation heat-affected zone have a size greater than 100 nm.

In some embodiments, the microstructure morphology of the surface of the negative electrode current collector includes one or more of surface ablation without pore formation, pits, bowl-shaped pores, through-holes, or grooves.

In some embodiments, the negative electrode current collector is prepared by the preparation method according to the first aspect of the present application.

In a third aspect, the present application provides a battery cell including a negative electrode current collector prepared by the preparation method according to the first aspect of the present application or the negative electrode current collector according to the second aspect of the present application, where the battery cell includes at least one of a negative electrode-free lithium metal battery cell and a negative electrode-free sodium metal battery cell.

In a fourth aspect, the present application provides a battery including the battery cell according to the third aspect of the present application.

In a fifth aspect, the present application provides an electric apparatus including the battery according to the fourth aspect of the present application, where the battery is used to supply electrical energy.

The electric apparatus of the present application includes the battery provided by the present application, and thereby possesses at least the same advantages as the battery.

### BRIEF DESCRIPTION OF DRAWINGS

To more clearly illustrate the technical solutions of the embodiments of the present application, the drawings required for use in the embodiments of the present application are briefly introduced below. It is evident that the drawings described below are merely some embodiments of the present application, and those of ordinary skill in the art can obtain other drawings based on these drawings without creative effort.
FIG. 1 is a schematic diagram of a battery cell according to some embodiments of the present application.
FIG. 2 is an exploded schematic diagram of a battery cell according to some embodiments of the present application.
FIG. 3 is a schematic diagram of a battery module according to some embodiments of the present application.
FIG. 4 is a schematic diagram of a battery pack according to some embodiments of the present application.
FIG. 5 is an exploded schematic diagram of the battery pack shown in FIG. 4.
FIG. 6 is a scanning electron microscope image of a negative electrode current collector according to some embodiments of the present application.
FIG. 7 is a scanning electron microscope image of a negative electrode current collector according to other embodiments of the present application.
FIG. 8 is a scanning electron microscope image of a negative electrode current collector according to further embodiments of the present application.
FIG. 9 is a scanning electron microscope image of a negative electrode current collector according to further embodiments of the present application.
FIG. 10 is a scanning electron microscope image of a negative electrode current collector according to further embodiments of the present application.
FIG. 11 is a schematic diagram of an electric apparatus according to some embodiments of the present application.
FIG. 12 shows X-ray diffraction images of the negative electrode current collectors of Comparative Example 1-1 and Example 1-9, where curve I represents an X-ray diffraction image of the negative electrode current collector of Comparative Example 1-1, and curve II represents an X-ray diffraction image of the negative electrode current collector of Example 1-9.
FIG. 13 shows electron backscatter diffraction (EBSD) images of the negative electrode current collectors of Comparative Example 1-1 and Example 1-9, where FIG. (a) represents an electron backscatter diffraction (EBSD) image of the negative electrode current collector of Comparative Example 1-1, and FIG. (b) represents an electron backscatter diffraction (EBSD) image of the negative electrode current collector of Example 1-9.

In the drawings, the drawings are not necessarily drawn to actual scale.

Description of reference numerals: 1 battery pack, 2 upper enclosure, 3 lower enclosure, 4 battery module, 5 battery cell, 51 casing, 52 electrode assembly, AND 53 cover plate.

### DESCRIPTION OF EMBODIMENTS

Hereinafter, embodiments specifically disclosing the negative electrode current collector and preparation method thereof, battery cell, battery, and electric apparatus of the present application will be described in detail with appropriate reference to the drawings. However, unnecessary detailed descriptions may be omitted in some cases. For example, detailed descriptions of well-known matters or repeated descriptions of substantially identical structures may be omitted. This is to avoid unnecessarily lengthy descriptions and to facilitate understanding by those skilled in the art. Additionally, the drawings and the following description are provided to enable those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a particular range. Ranges defined in this manner may include or exclude endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise stated, the numerical range "a-b" represents a shorthand notation for any combination of real numbers between a and b, where both a and b are real numbers. For example, the numerical range "0-5" means that all real numbers between "0-5" have been listed herein, and "0-5" is merely a shorthand notation for these numerical combinations. Additionally, when a parameter is expressed as an integer ≥2, it is equivalent to disclosing that the parameter is, for example, an integer of 2, 3, 4, 5, 6, 7, 8, 9, 10, 11, 12, and so on.

Unless otherwise specified, all embodiments and optional embodiments of the present application can be combined with each other to form new technical solutions, and such technical solutions should be considered included in the disclosure of the present application.

Unless otherwise specified, all technical features and optional technical features of the present application can be combined with each other to form new technical solutions, and such technical solutions should be considered included in the disclosure of the present application.

Unless otherwise specified, all steps in the present application can be performed sequentially or randomly, preferably sequentially. For example, a method including steps (a) and (b) indicates that the method may include steps (a) and (b) performed sequentially, or steps (b) and (a) performed sequentially. For example, if it is mentioned that the method may further include step (c), it means that step (c) can be added to the method in any order, for example, the method may include steps (a), (b), and (c), or steps (a), (c), and (b), or steps (c), (a), and (b).

In the present application, the terms "multiple" or "various" refer to two or more.

In the description of the embodiments of the present application, unless otherwise specified, a first feature being "on" or "under" a second feature may mean that the first and second features are in direct contact, or that the first and second features are in indirect contact through an intermediate medium. Moreover, a first feature being "above," "over," or "on top of" a second feature may mean that the first feature is directly above or obliquely above the second feature, or merely that the horizontal height of the first feature is greater than that of the second feature. A first feature being "below," "under," or "beneath" a second feature may mean that the first feature is directly below or obliquely below the second feature, or merely that the horizontal height of the first feature is less than that of the second feature.

Unless otherwise specified, the terms used in the present application have the commonly understood meanings in the art.

Unless otherwise specified, the numerical values of the parameters mentioned in the present application can be measured using various test methods commonly used in the art, for example, they can be measured according to the test methods provided in the embodiments of the present application. Unless otherwise specified, the test temperature for each parameter is 25°C.

The battery mentioned in the embodiments of the present application may be a single physical module including one or more battery cells to provide higher voltage and capacity. For example, the battery mentioned in the present application may include a battery cell, a battery module, or a battery pack, or the like.

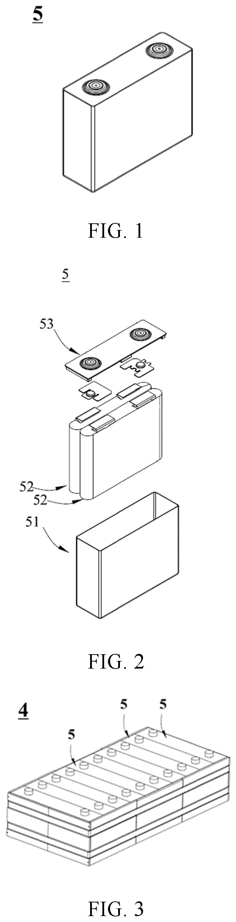

A battery cell is the smallest unit constituting a battery, capable of independently performing charge and discharge functions. The battery cell may be cylindrical, prismatic, or other shapes, which are not limited by the embodiments of the present application. FIG. 1 shows a battery cell 5 with a prismatic structure as an example.

When there are multiple battery cells, the multiple battery cells are connected in series, parallel, or a combination thereof through a busbar component. In some embodiments, the battery may be a battery module; when there are multiple battery cells, the multiple battery cells are arranged and fixed to form a battery module. In some embodiments, the battery may be a battery pack, which includes an enclosure and battery cells, with the battery cells or battery modules accommodated in the enclosure. In some embodiments, the enclosure may form part of the chassis structure of a vehicle. For example, a part of the enclosure may form at least a portion of the chassis of the vehicle, or a part of the enclosure may form at least a portion of the crossbeams and longitudinal beams of the vehicle.

In some embodiments, the battery may be an energy storage device. The energy storage device includes an energy storage container, an energy storage cabinet, and the like.

The battery cell includes an electrode assembly. The electrode assembly may have a wound structure or a stacked structure, which is not limited by the embodiments of the present application.

The battery cell may further include an outer package, which can be used to encapsulate the electrode assembly. The outer package may be a hard shell, such as a hard plastic shell, aluminum shell, or steel shell. The outer package may alternatively be a soft pouch, such as a pouch-type soft package. The material of the soft pouch may be plastic, such as one or more of polypropylene, polybutylene terephthalate (PBT), or polybutylene succinate (PBS).

In some embodiments, as shown in FIG. 2, the outer package may include a casing 51 and a cover plate 53. The casing 51 may include a bottom plate and side plates connected to the bottom plate, with the bottom plate and side plates enclosing a receiving cavity. The casing 51 has an opening communicating with the receiving cavity, and the cover plate 53 is used to cover the opening to seal the receiving cavity. The electrode assembly 52 is encapsulated in the receiving cavity. There may be one or more electrode assemblies 52 in the battery cell 5, and the quantity may be adjusted as required.

In some embodiments, battery cells may be assembled into a battery module, and the number of battery cells in the battery module may be multiple, with the specific number adjustable based on the application and capacity of the battery module. FIG. 3 shows a schematic diagram of a battery module 4 as an example. As shown in FIG. 3, in the battery module 4, multiple battery cells 5 may be arranged sequentially along the length direction of the battery module 4. Alternatively, they may be arranged in any other manner. The multiple battery cells 5 may be further fixed by fasteners.

Optionally, the battery module 4 may further include a housing with an accommodating space, in which the multiple battery cells 5 are accommodated.

In some embodiments, the above battery module may be further assembled into a battery pack, and the number of battery modules in the battery pack may be adjusted based on the application and capacity of the battery pack.

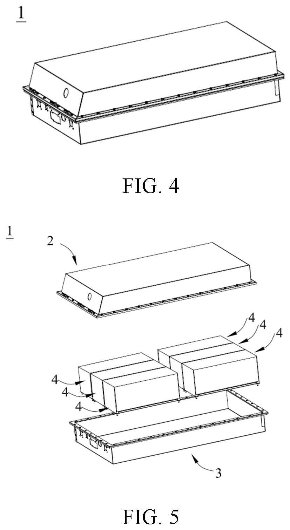

FIG. 4 and FIG. 5 are schematic diagrams of a battery pack 1 as an example. As shown in FIG. 4 and FIG. 5, the battery pack 1 may include an enclosure and multiple battery modules 4 disposed within the enclosure. The enclosure includes an upper enclosure 2 and a lower enclosure 3, where the upper enclosure 2 is used to cover the lower enclosure 3, forming a closed space for accommodating the battery modules 4. The multiple battery modules 4 can be arranged in any manner within the enclosure.

The battery cells provided in the embodiments of the present application may include negative electrode-free lithium metal battery cells, negative electrode-free sodium metal battery cells, or the like.

A negative electrode-free battery cell generally refers to a battery cell constructed without actively providing a negative electrode active material layer on the negative electrode side during the manufacturing process of the battery cell, for example, without forming a negative electrode active material layer by coating or depositing a layer or a carbonaceous active material layer at the negative electrode during the manufacturing process of the battery cell. During the first charge, ions gain electrons at the negative electrode side and deposit on the surface of the negative electrode current collector to form a metal, and during discharge, the metal can transform back into ions and return to the positive electrode, achieving cyclic charge and discharge. Compared to other battery cells, negative electrode-free battery cells can achieve higher energy density due to the absence of a negative electrode active material layer. In some embodiments, to improve battery cell performance, some substances conventionally used as negative electrode active materials, such as carbon materials, may be provided on the negative electrode side of negative electrode-free battery cells. Although these substances have some capacity, their content is low and they are not used as the primary negative electrode active material in the battery cell, so such battery cells can still be considered negative electrode-free battery cells. The CB (Cell Balance) value of negative electrode-free battery cells is typically very small. For example, in some embodiments, the CB value of a negative electrode-free battery cell may be less than or equal to 0.1. The CB value is the ratio of the capacity per unit area of the negative electrode to the capacity per unit area of the positive electrode in the battery cell. Since negative electrode-free battery cells contain no or only a small amount of negative electrode active material, the capacity per unit area of the negative electrode is small, resulting in a low CB value, typically less than or equal to 0.1.

Copper current collectors are commonly used negative electrode current collectors, and the wettability of metals such as lithium and sodium on conventional copper current collectors is poor, leading to high nucleation overpotential and prone to preferential nucleation at certain surface defect sites (for example, protrusions and impurity sites) on conventional copper current collectors. The preferential nucleation sites serve as dominant growth points, which readily lead to dendrite formation and internal short circuits in the battery, adversely affecting the reliability and cycling performance of the battery.

Embodiments of the present application provide a preparation method for a negative electrode current collector, and the use of the negative electrode current collector prepared by this method in negative electrode-free lithium metal batteries or negative electrode-free sodium metal batteries can enable the battery to have good cycling performance and high reliability.

The preparation method for the negative electrode current collector provided in the embodiments of the present application includes the following steps: providing a metal substrate, where the metal substrate is a two-dimensional metal structure or a three-dimensional porous metal structure; and irradiating at least part of the surface of the metal substrate with a laser, causing metal grains in a laser ablation heat-affected zone of the metal substrate to melt and recrystallize to form smaller-sized metal grains, thereby obtaining the negative electrode current collector.

The laser has high energy, and irradiating at least part of the surface of the metal substrate causes some metal atoms at the irradiation site to vaporize and be removed. The metal at the laser irradiation site that is not ablated and vaporized, as well as the metal in the vicinity thereof, is heated. Such a region is called the heat-affected zone. It is generally believed that the laser ablation heat-affected zone affects the performance of the metal substrate.

In the present application, by adjusting the laser irradiation parameters, metal grains in the laser ablation heat-affected zone of the metal substrate can be melted and recrystallized to form smaller metal grains, and the reliability and cycling performance of a battery cell using the negative electrode current collector are improved.

By irradiating at least part of the surface of the metal substrate with a suitable laser, the metal in the laser ablation heat-affected zone can be rapidly heated to a temperature above its melting point, followed by rapid melting and recrystallization of the metal. This melting-recrystallization process can rapidly reduce the size of metal grains in the laser ablation heat-affected zone. The smaller-sized metal grains form more grain boundary defects and rapidly increase the surface energy of the metal substrate, thereby improving the wettability of metals such as lithium or sodium and the wettability of the electrolyte solution on the surface of the metal substrate. As a result, the nucleation overpotential of the negative electrode current collector can be reduced, dendrite formation can be suppressed, and then the reliability and cycling performance of the battery cell can be enhanced. To be specific, these smaller-sized metal grains can serve as an affinity treatment, and these smaller-sized metal grains are formed in situ on the surface of the metal substrate and have better adhesion with the metal substrate, helping to further improve the cycling performance of the battery cell.

Additionally, laser irradiation can also activate the surface of the negative electrode current collector, thereby increasing the electrochemically active area of the negative electrode current collector and further improving the cycling performance of the battery cell.

In some embodiments, the laser device generating the laser is a pulsed laser device, the wavelength of the pulsed laser device may be 694 nm to 1070 nm, the average power of the laser may be 30 W to 90 W, the pulse repetition frequency of the laser may be 30 KHz to 90 KHz, and the pulse width of the laser may be 20 ns to 120 ns.

When the average power of the laser is 30 W to 90 W, a relatively large laser ablation heat-affected zone can be formed on the surface of the metal substrate without causing overall melting of the metal substrate or burn-through of some ligaments, and metal grains in the laser ablation heat-affected zone can be melted and recrystallized to form smaller-sized metal grains, thereby better improving the reliability and cycling performance of the battery cell.

When the pulse repetition frequency of the laser is 30 KHz to 90 KHz, a relatively large laser ablation heat-affected zone can be formed on the surface of the metal substrate without causing overall melting of the metal substrate or burn-through of some ligaments, and metal grains in the laser ablation heat-affected zone can be melted and recrystallized to form smaller-sized metal grains, thereby better improving the reliability and cycling performance of the battery cell.

A larger pulse width of the laser widens the laser ablation heat-affected zone of the metal substrate. When the pulse width of the laser is 20 ns to 120 ns, a relatively large laser ablation heat-affected zone can be formed on the surface of the metal substrate, and metal grains in the laser ablation heat-affected zone can be melted and recrystallized to form smaller-sized metal grains, thereby better improving the reliability and cycling performance of the battery cell.

In the present application, by adjusting the laser irradiation parameters, metal grains in the laser ablation heat-affected zone are melted and recrystallized to form smaller metal grains. These smaller-sized metal grains form more grain boundary defects and rapidly increase the surface energy of the metal substrate, thereby improving the wettability of metals such as lithium or sodium and the wettability of the electrolyte solution on the surface of the metal substrate. As a result, the nucleation overpotential of the negative electrode current collector can be reduced, dendrite formation can be suppressed, and the reliability and cycling performance of the battery cell can be enhanced. Moreover, laser irradiation can also activate the surface of the negative electrode current collector, thereby increasing the electrochemically active area of the negative electrode current collector and further improving the cycling performance of the battery cell.

It should be noted that preparation methods in which laser irradiation is performed on at least part of the surface of the metal substrate with parameters outside the ranges provided in the embodiments of the present application, and which is capable of causing metal grains in the laser ablation heat-affected zone of the metal substrate to undergo melting and recrystallization to form smaller-sized metal grains, that is, similar concepts with laser irradiation parameters beyond the ranges provided in the embodiments of the present application, still fall within the protection scope of the present application.

Optionally, the wavelength of the pulsed laser device may be 1050 nm to 1070 nm.

In some embodiments, the pulse energy of the pulsed laser device may be 1 mJ.

In some embodiments, the pulsed laser device may include one or more of a ruby laser device, a fiber laser device, a glass laser device, or a YAG laser device. Optionally, the glass laser device may be a neodymium glass laser device. Optionally, the YAG laser device may be a neodymium:YAG laser device.

In some embodiments, the traverse speed of the laser may be 1000 mm/s to 3500 mm/s. Changing the traverse speed of the laser can adjust the microstructure morphology of the surface of the negative electrode current collector. A slower traverse speed of the laser results in closer laser irradiation sites, easily forming lines; a faster traverse speed results in farther laser irradiation sites, easily forming holes. Appropriate traverse speeds can be selected based on different microstructure morphologies.

In some embodiments, before laser irradiation, the initial size of the metal grains of the metal substrate may be greater than 100 nm; and after laser irradiation, the size of the metal grains formed by recrystallization in the laser ablation heat-affected zone of the metal substrate may be 10 nm to 100 nm, optionally 10 nm to 50 nm.

The size of the metal grains can be obtained by electron backscatter diffraction (Electron Backscattered Diffraction, EBSD) scanning method. During testing, the sample may be fixed on a sample stage, and parameters such as the angle between the EBSD probe plane and the surface of a sample under test, acceleration voltage, magnification, and step size can be adjusted, and the number of grains in the observation field can be adjusted, for example, greater than or equal to 100. Then, by scanning the diffraction patterns in the analysis area, the sizes of all grains in the analysis area can be obtained.

The metal substrate is a two-dimensional metal structure or a three-dimensional porous metal structure. The metal substrate can be commercially available or prepared by known preparation processes in the art.

In some embodiments, the thickness H1 of the two-dimensional metal structure may be 5 µm to 12 µm, optionally 5 µm to 9 µm.

Optionally, the two-dimensional metal structure may be a two-dimensional copper foil, a two-dimensional copper alloy foil, a two-dimensional nickel foil, or a two-dimensional nickel alloy foil.

Optionally, the metal substrate is a two-dimensional metal structure, and the average power of the laser may be 30 W to 80 W, for example, 30 W, 35 W, 40 W, 45 W, 50 W, 55 W, 60 W, 65 W, 70 W, 75 W, 80 W, or a range composed of any of the above values. More optionally, the average power of the laser may be 40 W to 80 W.

When the average power of the laser is within the above range, a relatively large laser ablation heat-affected zone can be formed on the surface of the two-dimensional metal structure without causing overall melting of the two-dimensional metal structure, and metal grains in the laser ablation heat-affected zone can be melted and recrystallized to form smaller-sized metal grains, thereby better improving the reliability and cycling performance of the battery cell.

Optionally, the metal substrate is a two-dimensional metal structure, and the pulse repetition frequency of the laser may be 30 KHz to 80 KHz, for example, 30 KHz, 35 KHz, 40 KHz, 45 KHz, 50 KHz, 55 KHz, 60 KHz, 65 KHz, 70 KHz, 75 KHz, 80 KHz, or a range composed of any of the above values. More optionally, the pulse repetition frequency of the laser may be 40 KHz to 80 KHz.

When the pulse repetition frequency of the laser is within the above range, a relatively large laser ablation heat-affected zone can be formed on the surface of the two-dimensional metal structure without causing melting of the two-dimensional metal structure, and metal grains in the laser ablation heat-affected zone can be melted and recrystallized to form smaller-sized metal grains, thereby better improving the reliability and cycling performance of the battery cell.

Optionally, the metal substrate is a two-dimensional metal structure, and the pulse width of the laser may be 40 ns to 120 ns, for example, 40 ns, 45 ns, 50 ns, 55 ns, 60 ns, 65 ns, 70 ns, 75 ns, 80 ns, 90 ns, 100 ns, 110 ns, 120 ns, or a range composed of any of the above values. More optionally, the pulse width of the laser may be 60 ns to 120 ns.

When the pulse width of the laser is within the above range, a relatively large laser ablation heat-affected zone can be formed on the surface of the two-dimensional metal structure, and metal grains in the laser ablation heat-affected zone can be melted and recrystallized to form smaller-sized metal grains, thereby better improving the reliability and cycling performance of the battery cell.

Optionally, the metal substrate is a two-dimensional metal structure, and the defocus amount of the laser may be - 120 µm to 20 µm, optionally -(H1 × 100%) µm to 0 µm, more optionally, -(H1 × 70%) µm to 0 µm.

When the defocus amount of the laser is within the above range, a relatively large laser ablation heat-affected zone can be formed on the surface of the two-dimensional metal structure, and metal grains in the laser ablation heat-affected zone can be melted and recrystallized to form smaller-sized metal grains, thereby better improving the reliability and cycling performance of the battery cell.

In some embodiments, the thickness H2 of the three-dimensional porous metal structure may be 80 µm to 1000 µm, optionally 100 µm to 600 µm.

Optionally, the three-dimensional porous metal structure may be mesh copper, mesh nickel, copper foam, or nickel foam.

Optionally, the metal substrate is a three-dimensional porous metal structure, and the average power of the laser may be 40 W to 90 W, for example, 40 W, 45 W, 50 W, 55 W, 60 W, 65 W, 70 W, 75 W, 80 W, 85 W, 90 W, or a range composed of any of the above values. More optionally, the average power of the laser may be 60 W to 90 W.

When the average power of the laser is within the above range, a relatively large laser ablation heat-affected zone can be formed on the surface of the three-dimensional porous metal structure without causing burn-through of some ligaments of the three-dimensional porous metal structure, and metal grains in the laser ablation heat-affected zone can be melted and recrystallized to form smaller-sized metal grains, thereby better improving the reliability and cycling performance of the battery cell.

Optionally, the metal substrate is a three-dimensional porous metal structure, and the pulse repetition frequency of the laser may be 40 KHz to 90 KHz, for example, 40 KHz, 45 KHz, 50 KHz, 55 KHz, 60 KHz, 65 KHz, 70 KHz, 75 KHz, 80 KHz, 85 KHz, 90 KHz, or a range composed of any of the above values. More optionally, the pulse repetition frequency of the laser may be 60 KHz to 90 KHz.

When the pulse repetition frequency of the laser is within the above range, a relatively large laser ablation heat-affected zone can be formed on the surface of the three-dimensional porous metal structure without causing burn-through of some ligaments of the three-dimensional porous metal structure, and metal grains in the laser ablation heat-affected zone can be melted and recrystallized to form smaller-sized metal grains, thereby better improving the reliability and cycling performance of the battery cell.

Optionally, the metal substrate is a three-dimensional porous metal structure, and the pulse width of the laser may be 40 ns to 120 ns, for example, 40 ns, 45 ns, 50 ns, 55 ns, 60 ns, 65 ns, 70 ns, 75 ns, 80 ns, 90 ns, 100 ns, 110 ns, 120 ns, or a range composed of any of the above values. More optionally, the pulse width of the laser may be 60 ns to 120 ns.

When the pulse width of the laser is within the above range, a relatively large laser ablation heat-affected zone can be formed on the surface of the three-dimensional porous metal structure, and metal grains in the laser ablation heat-affected zone can be melted and recrystallized to form smaller-sized metal grains, thereby better improving the reliability and cycling performance of the battery cell.

Optionally, the metal substrate is a three-dimensional porous metal structure, and the defocus amount of the laser may be -(H2 × 150%) µm to 0, optionally -(H2 × 100%) µm to 0, more optionally -(H2 × 70%) µm to -(H2 × 50%) µm.

When the defocus amount of the laser is within the above range, a relatively large laser ablation heat-affected zone can be formed on the surface of the three-dimensional porous metal structure, and metal grains in the laser ablation heat-affected zone can be melted and recrystallized to form smaller-sized metal grains, thereby better improving the reliability and cycling performance of the battery cell.

In some embodiments, after laser irradiation, the microstructure morphology of the surface of the negative electrode current collector may include one or more of surface ablation without pore formation, pits, bowl-shaped pores, through-holes, or grooves.

Optionally, after laser irradiation, the microstructure morphology of the surface of the two-dimensional metal structure may include one or more of surface ablation without pore formation, bowl-shaped pores, through-holes, or grooves.

The size of metal grains at positions of surface ablation without pore formation and nearby areas becomes smaller, for example, 10 nm to 100 nm, optionally 10 nm to 50 nm.

The size of metal grains at bowl-shaped hole positions and nearby areas becomes smaller, for example, 10 nm to 100 nm, optionally 10 nm to 50 nm.

The size of metal grains at through-hole edge positions and nearby areas becomes smaller, for example, 10 nm to 100 nm, optionally 10 nm to 50 nm.

The size of metal grains at groove positions and nearby areas becomes smaller, for example, 10 nm to 100 nm, optionally 10 nm to 50 nm.

Optionally, bowl-shaped pores may be array bowl-shaped pores.

Optionally, the aperture of array bowl-shaped pores may be 20 µm to 50 µm, the hole spacing may be greater than or equal to 15 µm, and the hole depth may be less than or equal to 2/3 of the thickness H1 of the negative electrode current collector. Further, the hole spacing may be less than 100 µm.

Optionally, through-holes may be array through-holes.

Optionally, the aperture of array through-holes may be 20 µm to 140 µm, and the hole spacing may be greater than or equal to 15 µm. Further, the hole spacing may be less than 100 µm.

The hole spacing refers to the shortest distance between the edges of adjacent holes.

Optionally, the spacing of grooves may be greater than or equal to 15 µm, and the depth of grooves may be less than or equal to 2/3 of the thickness H1 of the negative electrode current collector.

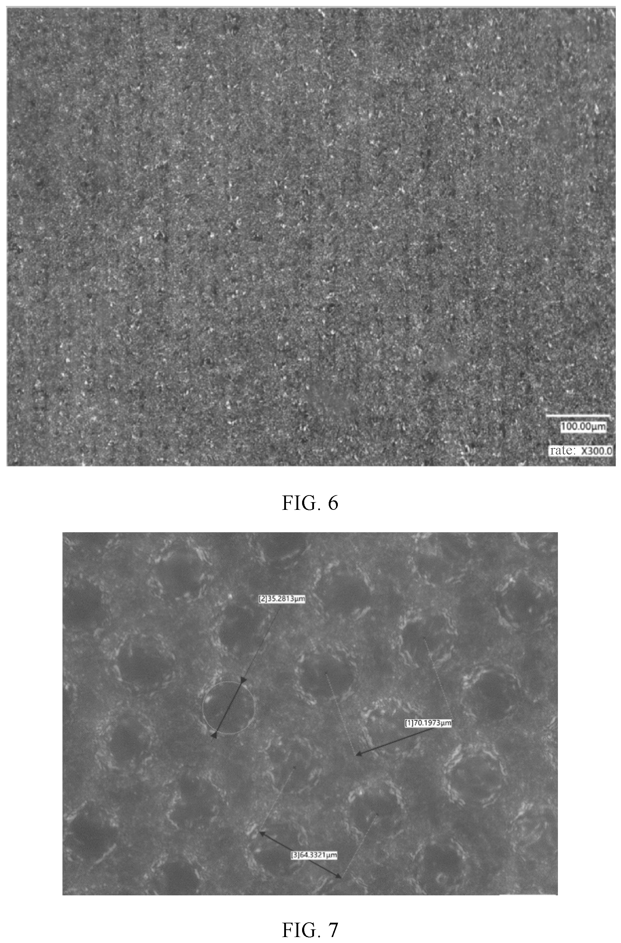

As shown in FIG. 6, after laser irradiation, the surface of the two-dimensional metal structure is ablated without hole formation.

Optionally, after laser irradiation, an area proportion of the region on the surface of the two-dimensional metal structure where metal grain melting and recrystallization occur may be 40% to 100%, more optionally 50% to 100%, 60% to 100%, 70% to 100%, or 80% to 100%.

As shown in FIG. 7, after laser irradiation, array bowl-shaped pores are formed on the surface of the two-dimensional metal structure.

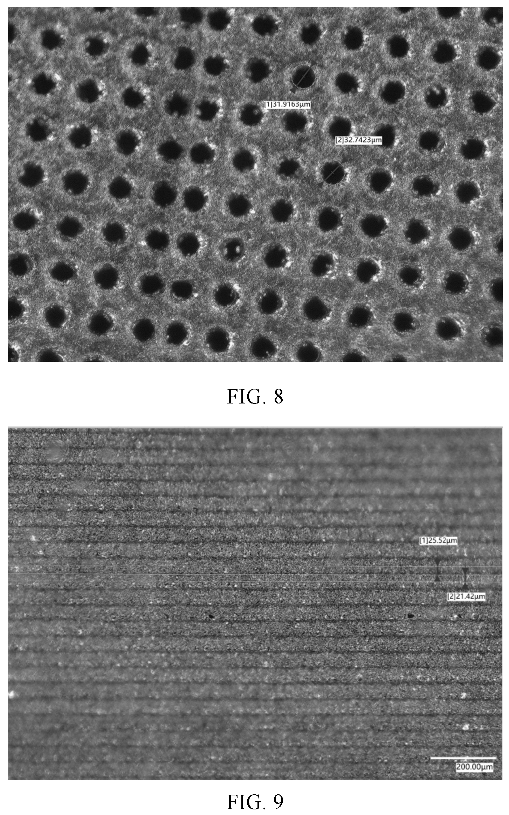

As shown in FIG. 8, after laser irradiation, array through-holes are formed on the surface of the two-dimensional metal structure.

As shown in FIG. 9, after laser irradiation, grooves are formed on the surface of the two-dimensional metal structure.

Optionally, after laser irradiation, the microstructure morphology of the surface of the three-dimensional porous metal structure may include one or more of surface ablation without pore formation or pits.

The size of metal grains at positions of surface ablation without pore formation and nearby areas becomes smaller, for example, 10 nm to 100 nm, optionally 10 nm to 50 nm.

The size of metal grains at pit positions and nearby areas becomes smaller, for example, 10 nm to 100 nm, optionally 10 nm to 50 nm.

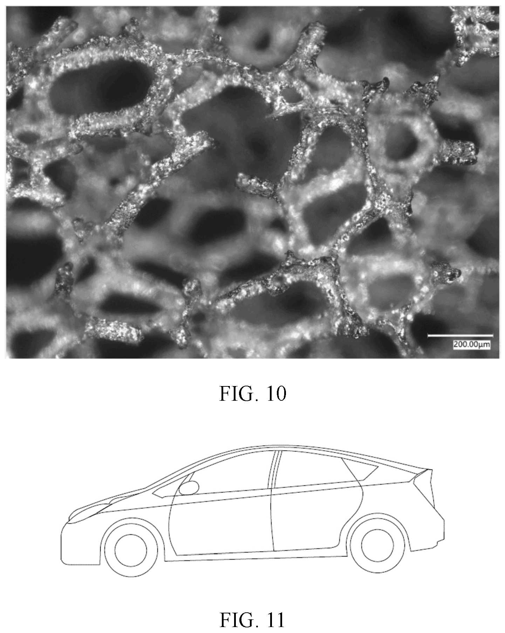

As shown in FIG. 10, after laser irradiation, the surface of the foam metal structure is ablated without hole formation.

In some embodiments, before irradiating the surface of the metal substrate with a laser, the following step may be further included: cleaning oil, impurities, and/or oxide layers on the surface of the metal substrate. Optionally, the cleaning may include ultrasonic cleaning or chemical cleaning. The cleaning may include water washing, weak acid washing, or alcohol washing.

Embodiments of the present application also provide a negative electrode current collector. The negative electrode current collector includes a laser ablation heat-affected zone and a non-laser ablation heat-affected zone, where metal grains in the laser ablation heat-affected zone have a size less than that of metal grains in the non-laser ablation heat-affected zone.

The metal grains in the laser ablation heat-affected zone are smaller. These smaller-sized metal grains form more grain boundary defects and rapidly increase the surface energy of the negative electrode current collector, thereby improving the wettability of metals such as lithium or sodium and the wettability of the electrolyte solution on the surface of the negative electrode current collector. As a result, the nucleation overpotential of the negative electrode current collector can be reduced, dendrite formation can be suppressed, and the reliability and cycling performance of the battery cell can be enhanced. Moreover, the electrochemically active area of the negative electrode current collector increases, thereby further improving the cycling performance of the battery cell.

The laser ablation heat-affected zone may be a continuous region or multiple discontinuous regions spaced apart.

In some embodiments, the non-laser ablation heat-affected zone may include at least part of the surface zone, that is, at least part of the surface of the negative electrode current collector may be a non-laser ablation heat-affected zone.

In some embodiments, the metal grain size in the laser ablation heat-affected zone may be 10 nm to 100 nm, optionally 10 nm to 50 nm.

In some embodiments, the metal grain size in the non-laser ablation heat-affected zone may be greater than 100 nm.

In some embodiments, the microstructure morphology of the surface of the negative electrode current collector includes one or more of surface ablation without pore formation, pits, bowl-shaped pores, through-holes, or grooves.

The negative electrode current collector has a two-dimensional metal structure or a three-dimensional porous metal structure.

Optionally, the microstructure morphology of the surface of the two-dimensional metal structure may include one or more of surface ablation without pore formation, bowl-shaped pores, through-holes, or grooves.

The metal grains at positions of surface ablation without pore formation and nearby areas have a smaller size. Optionally, the size of metal grains at positions of surface ablation without pore formation and nearby areas may be 10 nm to 100 nm, optionally 10 nm to 50 nm.

The metal grains at bowl-shaped hole positions and nearby areas have a smaller size. Optionally, the size of metal grains at bowl-shaped hole positions and nearby areas may be 10 nm to 100 nm, optionally 10 nm to 50 nm.

The metal grains at through-hole edge positions and nearby areas have a smaller size. Optionally, the size of metal grains at through-hole edge positions and nearby areas may be 10 nm to 100 nm, optionally 10 nm to 50 nm.

The metal grains at groove positions and nearby areas have a smaller size. Optionally, the size of metal grains at groove positions and nearby areas may be 10 nm to 100 nm, optionally 10 nm to 50 nm.

Optionally, bowl-shaped pores may be array bowl-shaped pores.

Optionally, the aperture of array bowl-shaped pores may be 20 µm to 50 µm, the hole spacing may be greater than or equal to 15 µm, and the hole depth may be less than or equal to 2/3 of the thickness H1 of the negative electrode current collector. Further, the hole spacing may be less than 100 µm.

Optionally, through-holes may be array through-holes.

Optionally, the aperture of array through-holes may be 20 µm to 140 µm, and the hole spacing may be greater than or equal to 15 µm. Further, the hole spacing may be less than 100 µm.

Optionally, the spacing of grooves may be greater than or equal to 15 µm, and the depth of grooves may be less than or equal to 2/3 of the thickness H1 of the negative electrode current collector.

Optionally, an area proportion of the laser ablation heat-affected zone on the surface of the two-dimensional metal structure may be 40% to 100%, more optionally 50% to 100%, 60% to 100%, 70% to 100%, or 80% to 100%.

Optionally, the microstructure morphology of the surface of the three-dimensional porous metal structure may include one or more of surface ablation without pore formation or pits.

The size of metal grains at positions of surface ablation without pore formation and nearby areas becomes smaller, for example, 10 nm to 100 nm, optionally 10 nm to 50 nm.

The size of metal grains at pit positions and nearby areas becomes smaller, for example, 10 nm to 100 nm, optionally 10 nm to 50 nm.

In some embodiments, the negative electrode current collector may be prepared by the above preparation method.

Other features of the negative electrode current collector can refer to the above preparation method and are not repeated here.

The negative electrode current collector provided in the embodiments of the present application used in negative electrode-free lithium metal batteries or negative electrode-free sodium metal batteries can enable the battery to have good cycling performance and high reliability.

### [Positive electrode plate]

The battery cell includes a positive electrode plate.

In some embodiments, the positive electrode plate includes a positive electrode current collector and a positive electrode film layer disposed on at least one surface of the positive electrode current collector and including a positive electrode active material. For example, the positive electrode current collector has two surfaces opposite in its thickness direction, and the positive electrode film layer is disposed on either or both of the two opposite surfaces of the positive electrode current collector.

In some embodiments, the positive electrode active material includes materials capable of deintercalating and intercalating lithium.

In an example, the positive electrode active material may include, but is not limited to, one or more of lithium transition metal oxides, metal chalcogenides, lithium-containing phosphates, or their respective modified compounds. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium titanium oxide, or their respective modified compounds. Lithium transition metal oxides may include, but are not limited to, layered structures or spinel structures. Examples of lithium-containing phosphates may include, but are not limited to, one or more of lithium iron phosphate, lithium iron phosphate composite with carbon, lithium manganese phosphate, lithium manganese phosphate composite with carbon, lithium manganese iron phosphate, lithium manganese iron phosphate composite with carbon, or their respective modified compounds.

In some embodiments, to further enhance the energy density of the battery cell, the positive electrode active material may include one or more of lithium transition metal oxides represented by the general formula LiₐNi_{b}Co_{c}M_{d}OₑD_{f} or their modified compounds, where 0.8 ≤ a ≤ 1.2, 0.5 ≤ b < 1, 0 < c < 1, 0 < d < 1, 1 ≤ e ≤ 2, 0 ≤ f ≤ 1, M may include, but is not limited to, one or more of Ge, Mo, Sn, Mn, Al, Zr, Zn, Cu, Cr, Mg, Fe, V, Ti, or B, and D may include, but is not limited to, one or more of N, F, S, or Cl.

In some embodiments, the positive electrode active material may include both lithium transition metal oxides and lithium-containing phosphates. This configuration facilitates obtaining a battery with both high capacity and high reliability.

In an example, the positive electrode active material may include, but is not limited to, one or more of LiCoO₂, LiNiO₂, LiMnO₂, LiNi_{1/2}Mn_{1/2}O₂, LiMn₂O₄, Li_{4/3}Ti_{5/3}O₄, LiNi_{1/2}Mn_{1/2}O₂, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, LiMnPO₄, or Li1.13Ti0.57Fe0.3S2.

The charging and discharging of the battery cell are accompanied by deintercalation and consumption of Li, and the molar concentration of Li varies when the battery cell is discharged to different states. In the embodiments of the present application, in the listing of positive electrode active materials, the molar concentration of Li refers to the initial state of the material, that is, the state before feeding. When the positive electrode active material is applied in a battery cell, the molar concentration of Li may change after charge and discharge cycles. In the examples of positive electrode active materials in the embodiments of the present application, the molar concentration of O is only a theoretical value, lattice oxygen release may cause variations in the molar concentration of O, and the actual molar concentration of O may fluctuate.

In some embodiments, the positive electrode active material includes materials capable of deintercalating and intercalating sodium. For example, the positive electrode active material may include, but is not limited to, one or more of laminar transition metal oxides (including but not limited to P2-type or O3-type), polyanionic materials (such as phosphates, fluorophosphates, pyrophosphates, and sulfates), or Prussian-type materials.

In some embodiments, in an example, the positive electrode active material may include, but is not limited to, one or more of NaFeO₂, NaCoO₂, NaCrO₂, NaMnO₂, NaNiO₂, Na_{0.67}MO₂ (where M includes at least two of Fe, Co, Cr, Mn, Ni, V, Ti, or Mo), NaMO₂ (where M includes at least two of Fe, Co, Ni, V, Ti, or Mo), NaFePO₄, NaMnPO₄, NaCoPO₄, Na₄Fe₃(PO₄)₂O₇, Na₃V₂(PO₄)₂F₃, Na₃V₂(PO₄)₃, Prussian blue, Prussian white, or their respective modified compounds.

The modified compounds of the above positive electrode active materials may involve doping modification and/or surface coating modification of the positive electrode active materials.

In some embodiments, the positive electrode film layer may optionally further include a positive electrode conductive agent. In an example, the positive electrode conductive agent may include, but is not limited to, one or more of superconducting carbon, conductive graphite, acetylene black, carbon black, Ketjen black, carbon dots, carbon nanotubes, graphene, or carbon nanofibers.

In some embodiments, the positive electrode film layer may optionally further include a positive electrode binder. In an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoridehexafluoropropylene-tetrafluoroethylene terpolymer, tetrafluoroethylene-hexafluoropropylene copolymer, polyethylene oxide, fluorinated acrylate resin, styrene-butadiene rubber (SBR), water-soluble unsaturated resin SR-1B, water-based acrylic resin (for example, polyacrylic acid PAA, polymethacrylic acid PMAA, sodium polyacrylate PAAS), polyacrylamide (PAM), polyvinyl alcohol (PVA), sodium alginate (SA), or carboxymethyl chitosan (CMCS).

In some embodiments, the positive electrode current collector may be a metal foil or a composite current collector. As an example of a metal foil, aluminum foil may be used. The composite current collector may include a polymer material substrate and a metallic material layer formed on at least one surface of the polymer material substrate. In an example, the metallic material may include, but is not limited to, one or more of aluminum, aluminum alloy, nickel, nickel alloy, titanium, titanium alloy, silver, or silver alloy. In an example, the polymer material substrate may include, but is not limited to, one or more of polypropylene, polyethylene terephthalate (PET), polybutylene terephthalate (PBT), polystyrene (PS), or polyethylene (PE).

The positive electrode film layer is typically formed by coating a positive electrode slurry on the positive electrode current collector, followed by drying and cold pressing. The positive electrode slurry is generally formed by dispersing the positive electrode active material, an optional positive electrode conductive agent, an optional positive electrode binder, and any other components in a solvent and stirring them until the mixture is uniform. The solvent may be N-methylpyrrolidone (NMP), but is not limited thereto.

### [Electrolyte]

The battery cell includes an electrolyte.

In some embodiments, the electrolyte is an electrolyte solution, which includes an electrolyte salt and an organic solvent.

In some embodiments, the electrolyte solution includes anions, which may include one or more of bis(fluorosulfonyl)imide anion (FSI⁻), bis(trifluoromethanesulfonyl)imide anion (TFSI⁻), bis(oxalato)borate anion (BOB⁻), difluoro(oxalato)borate anion (DFOB⁻), difluorobis(oxalato)phosphate anion (DFOP⁻), tetrafluoro(oxalato)phosphate anion (TFOP⁻), difluorophosphate anion (PO₂F₂⁻), hexafluorophosphate anion (PF₆⁻), tetrafluoroborate anion (BF₄⁻), hexafluoroarsenate anion (AsF₆⁻), or trifluoromethanesulfonate anion (CF₃SO₃⁻).

In some embodiments, the electrolyte solution includes cations, which may include one or more of lithium ions or sodium ions.

In some embodiments, a concentration of the electrolyte salt may be 0.3 mol/L or higher, optionally 0.7 mol/L or higher. Further, the concentration of the electrolyte salt may be 4 mol/L or lower, optionally 2.5 mol/L or lower, or 1.7 mol/L or lower. The electrolyte salt having a concentration within the above range enables the electrolyte solution to have appropriate ionic conductivity.

The organic solvent may include, but is not limited to, one or more of esters, ethers, sulfones, or nitriles. Esters may include, but are not limited to, one or more of carbonates, phosphates, carboxylates, sulfates, or sulfonates. Carbonates may include cyclic carbonates and/or linear carbonates, optionally including both cyclic carbonates and linear carbonates. Linear carbonates may include low-viscosity polar linear carbonates, aliphatic branched carbonates, and the like.

In an example, the organic solvent may include, but is not limited to, one or more of ethylene carbonate (EC), propylene carbonate (PC), butylene carbonate, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), tetraethylene glycol dimethyl ether (TEGDME), dimethoxyethane (DME), 1,3-dioxolane (DOL), trimethyl phosphate, 3-methoxypropionitrile, H(CF₂)₂OCH₃, C₄F₉OCH₃, H(CF₂)₂OCH₂CH₃, H(CF₂)₂OCH₂CF₃, H(CF₂)₂CH₂O(CF₂)₂H, CF₃CHFCF₂OCH₃, CF₃CHFCF₂OCH₂CH₃, 2-trifluoromethyl hexafluoropropyl methyl ether, 2-trifluoromethyl hexafluoropropyl ethyl ether, 2-trifluoromethyl hexafluoropropyl propyl ether, 3-trifluoromethyl octafluorobutyl methyl ether, 3-trifluoromethyl octafluorobutyl ethyl ether, 3-trifluoromethyl octafluorobutyl propyl ether, 4-trifluoromethyl decafluoropentyl methyl ether, 4-trifluoromethyl decafluoropentyl ethyl ether, 4-trifluoromethyl decafluoropentyl propyl ether, 5-trifluoromethyl dodecafluorohexyl methyl ether, 5-trifluoromethyl dodecafluorohexyl ethyl ether, 5-trifluoromethyl dodecafluorohexyl propyl ether, 6-trifluoromethyl tetradecafluoroheptyl methyl ether, 6-trifluoromethyl tetradecafluoroheptyl ethyl ether, 6-trifluoromethyl tetradecafluoroheptyl propyl ether, 7-trifluoromethyl hexadecafluorooctyl methyl ether, 7-trifluoromethyl hexadecafluorooctyl ethyl ether, or 7-trifluoromethyl hexadecafluorooctyl propyl ether.

In some embodiments, the electrolyte solution may optionally further include additives. For example, the additives may include a negative electrode film-forming additives, a positive electrode film-forming additives, or an additive capable of improving certain properties of batteries, such as an additive for improving overcharge performance of batteries, an additive for improving high-temperature performance of batteries, or an additive for improving low-temperature power performance of batteries.

### [Separator]

The battery cell may further include a separator. The separator is located between the positive electrode and the negative electrode, primarily to prevent internal short circuits.

The present application does not impose specific restrictions on the type of separator, and any well-known porous metal structure separator with good chemical and mechanical stability can be used.

In some embodiments, the material of the separator may include, but is not limited to, one or more of glass fiber, non-woven fabric, polyethylene, polypropylene, or polyvinylidene fluoride. The separator may be a single-layer film or a multilayer composite film. When the separator is a multilayer composite film, the materials of each layer may be the same or different.

The preparation method of the battery cell is well-known. In some embodiments, the positive electrode plate, separator, negative electrode current collector, and electrolyte solution can be assembled to form a battery cell. In an example, the positive electrode plate, separator, and negative electrode may be made into an electrode assembly through a winding process and/or a lamination process; and the electrode assembly is placed in an outer package, followed by drying, and the above electrolyte solution is injected, followed by processes such as vacuum encapsulation, standing, and formation to obtain a battery cell. Multiple battery cells can be further connected in series, parallel, or a combination thereof to form a battery module. Multiple battery modules can be further connected in series, parallel, or a combination thereof to form a battery pack. In some embodiments, multiple battery cells may alternatively be directly assembled into a battery pack.

Embodiments of the present application further provide an electric apparatus including the battery provided in the embodiments of the present application. The battery may be used as a power source for the electric apparatus or as an energy storage unit for the electric apparatus. The electric apparatus may include, but is not limited to, a mobile device (for example, a mobile phone, a tablet computer, or a notebook computer), an electric vehicle (for example, a pure electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The type of battery, such as a battery cell, battery module, or battery pack, may be selected depending on usage requirements of the electric apparatus.

FIG. 11 is a schematic diagram of an electric apparatus as an example. The electric apparatus is a pure electric vehicle, a hybrid electric vehicle, a plug-in hybrid electric vehicle, or the like. To meet the high power and high energy density requirements of the electric apparatus, a battery pack or battery module can be used.

In another example, the electric apparatus may be a mobile phone, tablet computer, laptop, or the like. Such electric apparatuses typically required to be light and thin, and a battery cell may be used as a power source.

### Examples

The following examples describe the content disclosed in the present application in more detail, and these examples are provided solely for illustrative purposes, as various modifications and changes within the scope of the disclosure of the present application will be apparent to those skilled in the art. Unless otherwise stated, all parts, percentages, and ratios reported in the following examples are based on weight, all reagents used in the examples are commercially available or synthesized by conventional methods and can be used directly without further processing, and all instruments used in the examples are commercially available.

### Comparative Example 1-1

A commercially available double-sided smooth two-dimensional copper foil with a thickness of 8 µm was used. The copper foil surface was wiped with a 1 mol/L acetic acid solution, then ultrasonically cleaned with ethanol and deionized water, followed by vacuum drying at 80°C, and the copper foil was used as the negative electrode current collector. The initial size of the copper foil metal grains was greater than 100 nm.

### Examples 1-1 to 1-7 and Comparative Examples 1-2 to 1-5

A commercially available double-sided smooth two-dimensional copper foil with a thickness of 8 µm was used. The copper foil surface was wiped with a 1 mol/L acetic acid solution, then ultrasonically cleaned with ethanol and deionized water, followed by vacuum drying at 80°C.

The dried copper foil was placed on a workpiece stage and fixed, laser irradiation parameters were set, and the laser path was defined. The laser device was then started, voltage was applied, and the copper foil was subjected to laser irradiation. After laser irradiation, the sample was taken out after its temperature had dropped to below 30°C and was used as a negative electrode current collector.

The laser device was IPG YLPN-1-20X120-100, with a quantity of one. The laser wavelength was 1064 nm, the pulse energy was 1 mJ, the pulse width was adjustable from 20 ns to 120 ns, and the pulse repetition frequency was adjustable. The laser irradiation parameters are shown in Table 1.

Before laser irradiation, the initial size of the copper foil metal grains was greater than 100 nm. After laser irradiation, the size of the metal grains formed by recrystallization in the laser ablation heat-affected zone was 10 nm to 100 nm.

**Table 1**

| No. | Laser irradiation parameters | | | | |
|---|---|---|---|---|---|
| | Average power (W) | Repetition frequency (KHz) | Pulse width (ns) | Defocus amount (µm) | Traverse speed (mm/s) |
| Example 1-1 | 60 | 40 | 60 | 0 | 3500 |
| Example 1-2 | 30 | 40 | 60 | 0 | 3500 |
| Example 1-3 | 60 | 30 | 60 | 0 | 3500 |
| Example 1-4 | 60 | 40 | 20 | 0 | 3500 |
| Example 1-5 | 60 | 40 | 120 | 0 | 3500 |
| Example 1-6 | 60 | 40 | 60 | 20 | 3500 |
| Example 1-7 | 70 | 60 | 60 | -120 | 3500 |
| Comparative Example 1-1 | - | - | - | - | - |
| Comparative Example 1-2 | 20 | 40 | 60 | 0 | 3500 |
| Comparative Example 1-3 | 100 | 40 | 60 | 0 | 3500 |
| Comparative Example 1-4 | 60 | 10 | 60 | 0 | 3500 |
| Comparative Example 1-5 | 60 | 100 | 60 | 0 | 3500 |

### Performance Testing

### (1) Evaluation of the improvement effect of copper foil after laser irradiation

After laser irradiation, the metal grains in the region of the copper foil surface where metal grain melting and recrystallization occur are smaller, and the color at such positions differs from that before laser irradiation. By observing the color change on the copper foil surface after laser irradiation with an optical microscope, an area proportion of the region on the copper foil surface where metal grain melting and recrystallization occur after laser irradiation can be determined.

When the color distinction on the copper foil surface after laser irradiation is not obvious, it can be considered that the area proportion of the region on the copper foil surface where metal grain melting and recrystallization occur after laser irradiation is greater than or equal to 80%, and in this case, the improvement effect of the copper foil after laser irradiation is excellent.

When the area proportion of the color change region on the copper foil surface after laser irradiation is greater than or equal to 60% and less than 80%, the improvement effect of the copper foil after laser irradiation is considered good.

When the area proportion of the color change region on the copper foil surface after laser irradiation is greater than or equal to 40% and less than 60%, the improvement effect of the copper foil after laser irradiation is considered moderate.

When the area proportion of the color change region on the copper foil surface after laser irradiation is greater than or equal to 20% and less than 40%, the improvement effect of the copper foil after laser irradiation is considered poor.

When the area proportion of the color change region on the copper foil surface after laser irradiation is less than 20%, the improvement effect of the copper foil after laser irradiation is considered very poor.

### (2) Nucleation overpotential test

In a glove box filled with argon, a metal lithium sheet was used as the counter electrode and assembled with the negative electrode current collector prepared above into a coin cell. The electrolyte salt of the electrolyte solution was LiFSI with a concentration of 1 mol/L, and the solvent of the electrolyte solution was ethylene glycol dimethyl ether (DME). The separator was a PE film with a thickness of 12 µm.

At 25°C, the assembled coin cell was left to stand for 12 hours and then discharged at a constant current density of 1 mA/cm² to 1 mAh/cm² until a capacity of 1 mAh/cm² was reached. At the start of the lithium metal deposition process, a noticeable voltage drop occurred, followed by a flat voltage plateau. The difference (absolute value) between the voltage at the lowest point of the discharge curve and the flat portion of the voltage plateau was taken as the nucleation overpotential of the negative electrode current collector.

### (3) Cycling performance test

Lithium iron phosphate, conductive agent carbon black (Super P), and binder polyvinylidene fluoride (PVDF) were mixed uniformly in a weight ratio of 8:1:1 in an appropriate amount of solvent N-methylpyrrolidone (NMP) to obtain a positive electrode slurry. The positive electrode slurry was coated on a positive electrode current collector aluminum foil and dried to obtain a positive electrode plate. In a glove box filled with argon, the positive electrode plate and the negative electrode current collector prepared above were assembled into a coin cell. The electrolyte salt of the electrolyte solution was LiFSI with a concentration of 1 mol/L, and the solvent of the electrolyte solution was ethylene glycol dimethyl ether (DME). The separator was a PE film with a thickness of 12 µm.

At 25°C, the assembled coin cell was left to stand for 12 hours, then charged at a constant current of 0.2C to 3.65 V, followed by constant voltage charging at 3.65 V to 0.05C. The coin cell was left to stand for 10 minutes, then discharged at a constant current of 0.5C to 2 V. The coin cell was cycled according to the above method, and the number of cycles corresponding to the point when the discharge capacity was 50% of the first cycle discharge capacity was recorded. During testing, the number of coin cell samples may be 6 or more, and the average value of the test results was taken.

**Table 2**

| No. | Surface morphology of copper foil after laser irradiation | Improvement effect of copper foil after laser irradiation | Performance test | |
|---|---|---|---|---|
| | | | Nucleation overpotential vs Li/Li⁺ (V) | Number of cycles (cycles) |
| Example 1-1 | Copper foil surface ablated without hole formation | Excellent | 0.05 | 305 |
| Example 1-2 | Copper foil surface ablated without hole formation | Medium | 0.05 | 277 |
| Example 1-3 | Copper foil surface ablated without hole formation | Good | 0.05 | 281 |
| Example 1-4 | Copper foil surface ablated without hole formation | Medium | 0.06 | 256 |
| Example 1-5 | Copper foil surface ablated without hole formation | Medium | 0.05 | 274 |
| Example 1-6 | Copper foil surface ablated without hole formation | Good | 0.05 | 288 |
| Example 1-7 | Copper foil surface ablated without hole formation | Medium | 0.07 | 255 |
| Comparative Example 1-1 | - | - | 0.11 | 180 |
| Comparative Example 1-2 | No obvious traces on copper foil surface | Very poor | 0.09 | 203 |
| Comparative Example 1-3 | Copper foil melted | - | - | - |
| Comparative Example 1-4 | No obvious traces on copper foil surface | Very poor | 0.10 | 200 |
| Comparative Example 1-5 | Copper foil melted | - | - | - |

From the test results in Table 2, it can be seen that by selecting appropriate laser irradiation parameters, metal grains in the laser ablation heat-affected zone can be melted and recrystallized to form smaller-sized metal grains without causing overall melting of the copper foil, and the cycling performance of the battery can be better improved.

In Comparative Example 1-2, the average power of the laser was low, and after laser irradiation, there were no obvious traces on the copper foil surface, leading to an insignificant improvement in battery cycling performance.

In Comparative Example 1-3, the average power of the laser was high, and after laser irradiation, the copper foil was already melted.

In Comparative Example 1-4, the pulse repetition frequency of the laser was low, and after laser irradiation, there were no obvious traces on the copper foil surface, leading to an insignificant improvement in battery cycling performance.

In Comparative Example 1-5, the pulse repetition frequency of the laser was high, and after laser irradiation, the copper foil was already melted.

From the test results of Examples 1-1 and 1-2, it can be seen that by further selecting an appropriate laser average power, a larger laser ablation heat-affected zone can be created on the metal substrate surface without causing overall melting of the metal substrate, and metal grains in the laser ablation heat-affected zone can be melted and recrystallized to form smaller-sized metal grains, thereby better improving the cycling performance of the battery.

From the test results of Examples 1-1 and 1-3, it can be seen that by further selecting an appropriate laser pulse repetition frequency, a larger laser ablation heat-affected zone can be created on the metal substrate surface without causing overall melting of the metal substrate, and metal grains in the laser ablation heat-affected zone can be melted and recrystallized to form smaller-sized metal grains, thereby better improving the cycling performance of the battery.

From the test results of Examples 1-1, 1-4, and 1-5, it can be seen that by further selecting an appropriate laser pulse width, a larger laser ablation heat-affected zone can be created on the metal substrate surface, and metal grains in the laser ablation heat-affected zone can be melted and recrystallized to form smaller-sized metal grains, thereby better improving the cycling performance of the battery.

From the test results of Examples 1-1, 1-6, and 1-7, it can be seen that by further selecting an appropriate laser defocus amount, a larger laser ablation heat-affected zone can be created on the metal substrate surface, and metal grains in the laser ablation heat-affected zone can be melted and recrystallized to form smaller-sized metal grains, thereby better improving the cycling performance of the battery.

### Examples 1-8 to 1-10

A commercially available double-sided smooth two-dimensional copper foil with a thickness of 8 µm was used. The copper foil surface was wiped with a 1 mol/L acetic acid solution, then ultrasonically cleaned with ethanol and deionized water, followed by vacuum drying at 80°C.

The dried copper foil was placed on a workpiece stage and fixed, laser irradiation parameters were set, and different laser paths were defined. The laser device was then started, voltage was applied, and the copper foil was subjected to laser irradiation. After laser irradiation, the sample was taken out after its temperature had dropped to below 30°C and was used as a negative electrode current collector.

The laser device was IPG YLPN-1-20X120-100, with a quantity of one. The laser wavelength was 1064 nm, the pulse energy was 1 mJ, the pulse width was adjustable from 20 ns to 120 ns, and the pulse repetition frequency was adjustable. The laser irradiation parameters are shown in Table 3. The test results are shown in Table 4.

Before laser irradiation, the initial size of the copper foil metal grains was greater than 100 nm. After laser irradiation, the size of the metal grains formed by recrystallization in the laser ablation heat-affected zone was 10 nm to 100 nm.

**Table 3**

| No. | Laser irradiation parameters | | | | |
|---|---|---|---|---|---|
| | Average power (W) | Repetition frequency (KHz) | Pulse width (ns) | Defocus amount (µm) | Traverse speed (mm/s) |
| Example 1-8 | 65 | 60 | 60 | -5 | 3500 |
| Example 1-9 | 70 | 60 | 60 | -5 | 3500 |
| Example 1-10 | 65 | 40 | 60 | -5 | 1000 |

**Table 4**

| No. | Surface morphology of copper foil after laser irradiation | Performance test | |
|---|---|---|---|
| | | Nucleation overpotential vs Li/Li⁺ (V) | Number of cycles (cycles) |
| Example 1-8 | Array bowl-shaped pores | 0.04 | 350 |
| Example 1-9 | Array through-holes | 0.05 | 400 |
| Example 1-10 | Grooves | 0.04 | 386 |

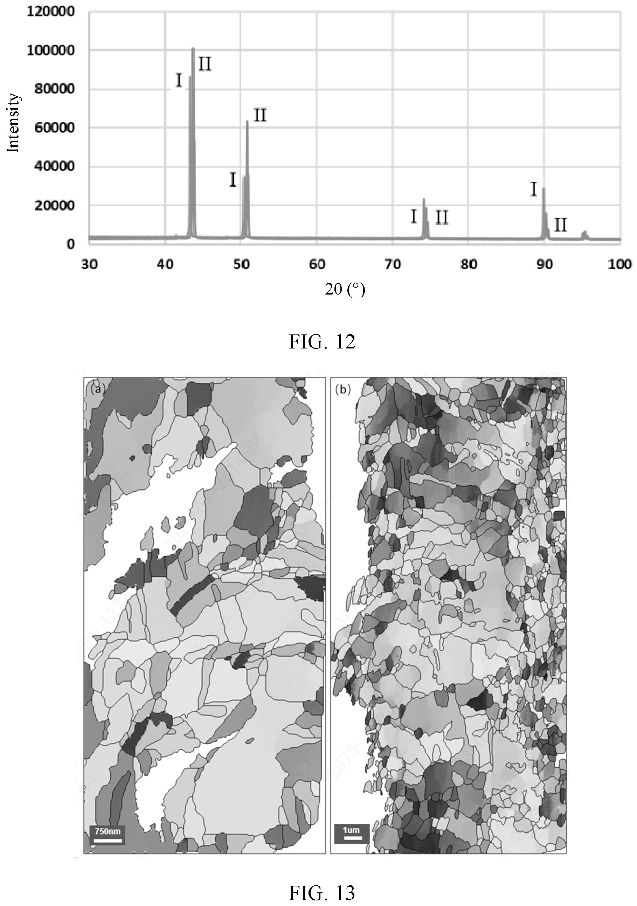

FIG. 12 shows X-ray diffraction images of the negative electrode current collectors of Comparative Example 1-1 and Example 1-9, where curve I represents an X-ray diffraction image of the negative electrode current collector of Comparative Example 1-1, and curve II represents an X-ray diffraction image of the negative electrode current collector of Example 1-9. FIG. 13 shows electron backscatter diffraction (EBSD) images of the negative electrode current collectors of Comparative Example 1-1 and Example 1-9, where FIG. (a) represents an electron backscatter diffraction (EBSD) image of the negative electrode current collector of Comparative Example 1-1, and FIG. (b) represents an electron backscatter diffraction (EBSD) image of the negative electrode current collector of Example 1-9. From FIG. 12, it can be seen that after laser irradiation, the full width at half maximum of the copper diffraction peaks increases, indicating that the copper grain size becomes smaller. From FIG. 13, it can be seen that after laser irradiation, smaller-sized metal grains are formed in the laser ablation heat-affected zone, located at the through-hole edge positions and nearby areas.

From the test results of Examples 1-1 and 1-8 to 1-10, it can be seen that when the microstructure morphology of the copper foil surface includes bowl-shaped pores and through-holes, the battery can have better cycling performance. This is because when the microstructure morphology of the copper foil surface includes bowl-shaped pores or through-holes, the copper foil has a larger specific surface area and a larger electrochemically active area.

### Comparative Example 2-1

A commercially available three-dimensional copper foam with a thickness of 120 µm was used. The copper foil surface was wiped with a 1 mol/L acetic acid solution, then ultrasonically cleaned with ethanol and deionized water, followed by vacuum drying at 80°C, and the copper foil was used as the negative electrode current collector. The initial size of the copper foam metal grains was greater than 100 nm.

### Examples 2-1 to 2-8 and Comparative Examples 2-2 to 2-5

A commercially available three-dimensional copper foam with a thickness of 120 µm was used. The copper foil surface was wiped with a 1 mol/L acetic acid solution, then ultrasonically cleaned with ethanol and deionized water, followed by vacuum drying at 80°C.

The dried copper foam was placed on a workpiece stage and fixed, laser irradiation parameters were set, and the laser path was defined. The laser device was then started, voltage was applied, and the copper foam was subjected to laser irradiation. After laser irradiation, the sample was taken out after its temperature had dropped to below 30°C and was used as a negative electrode current collector.

The laser device was IPG YLPN-1-20X120-100, with a quantity of one. The laser wavelength was 1064 nm, the pulse energy was 1 mJ, the pulse width was adjustable from 20 ns to 120 ns, and the pulse repetition frequency was adjustable. The laser irradiation parameters are shown in Table 5. The test results are shown in Table 6.

Before laser irradiation, the initial size of the copper foam metal grains was greater than 100 nm. After laser irradiation, the size of the metal grains formed by recrystallization in the laser ablation heat-affected zone was 10 nm to 100 nm.

**Table 5**

| No. | Laser irradiation parameters | | | | |
|---|---|---|---|---|---|
| | Average power (W) | Repetition frequency (KHz) | Pulse width (ns) | Defocus amount (µm) | Traverse speed (mm/s) |
| Example 2-1 | 70 | 60 | 60 | -60 | 3500 |
| Example 2-2 | 70 | 80 | 60 | -80 | 3500 |
| Example 2-3 | 40 | 60 | 60 | -60 | 3500 |
| Example 2-4 | 70 | 40 | 60 | -60 | 3500 |
| Example 2-5 | 70 | 60 | 20 | -60 | 3500 |
| Example 2-6 | 70 | 60 | 120 | -60 | 3500 |
| Example 2-7 | 70 | 60 | 60 | 0 | 3500 |
| Example 2-8 | 70 | 60 | 60 | -180 | 3500 |
| Comparative Example 2-1 | - | - | - | - | - |
| Comparative Example 2-2 | 20 | 60 | 60 | -60 | 3500 |
| Comparative Example 2-3 | 100 | 60 | 60 | -60 | 3500 |
| Comparative Example 2-4 | 70 | 20 | 60 | -60 | 3500 |
| Comparative Example 2-5 | 70 | 120 | 60 | -60 | 3500 |

**Table 6**

| No. | Surface morphology of copper foam after laser irradiation | Performance test | |
|---|---|---|---|
| | | Nucleation overpotential vs Li/Li⁺ (V) | Number of cycles (cycles) |
| Example 2-1 | Copper foam ligament surface ablated without hole formation | 0.10 | 174 |
| Example 2-2 | Pits on copper foam ligament surface | 0.09 | 199 |
| Example 2-3 | Copper foam ligament surface ablated without hole formation | 0.13 | 102 |
| Example 2-4 | Copper foam ligament surface ablated without hole formation | 0.11 | 145 |
| Example 2-5 | Copper foam ligament surface ablated without hole formation | 0.12 | 124 |
| Example 2-6 | Copper foam ligament surface ablated without hole formation | 0.13 | 102 |
| Example 2-7 | Copper foam ligament surface ablated without hole formation | 0.13 | 105 |
| Example 2-8 | Copper foam ligament surface ablated without hole formation | 0.13 | 98 |
| Comparative Example 2-1 | - | 0.18 | 78 |
| Comparative Example 2-2 | No obvious traces on copper foam surface | 0.17 | 81 |
| Comparative Example 2-3 | Some copper foam ligaments burnt through | - | - |
| Comparative Example 2-4 | No obvious traces on copper foam surface | 0.17 | 85 |
| Comparative Example 2-5 | Some copper foam ligaments burnt through | - | - |

From the test results in Table 6, it can be seen that by selecting appropriate laser irradiation parameters, metal grains in the laser ablation heat-affected zone can be melted and recrystallized to form smaller-sized metal grains without causing burn-through of copper foam ligaments, thereby better improving the cycling performance of the battery.

In Comparative Example 2-2, the average power of the laser was low, and after laser irradiation, there were no obvious traces on the copper foam surface, leading to an insignificant improvement in battery cycling performance.

In Comparative Example 2-3, the average power of the laser was high, and after laser irradiation, some copper foam ligaments were burned through.

In Comparative Example 2-4, the pulse repetition frequency of the laser was low, and after laser irradiation, there were no obvious traces on the copper foam surface, leading to an insignificant improvement in battery cycling performance.

In Comparative Example 2-5, the pulse repetition frequency of the laser was high, and after laser irradiation, some copper foam ligaments were burned through.

From the test results of Examples 2-1 and 2-3, it can be seen that by further selecting an appropriate laser average power, more ligament surfaces can have a laser ablation heat-affected zone without causing burn-through of copper foam ligaments, and metal grains in the laser ablation heat-affected zone can be melted and recrystallized to form smaller-sized metal grains, thereby better improving the cycling performance of the battery.

From the test results of Examples 2-1 and 2-4, it can be seen that by further selecting an appropriate laser pulse repetition frequency, more ligament surfaces can have a laser ablation heat-affected zone without causing burn-through of copper foam ligaments, and metal grains in the laser ablation heat-affected zone can be melted and recrystallized to form smaller-sized metal grains, thereby better improving the cycling performance of the battery.

From the test results of Examples 2-1, 2-5, and 2-6, it can be seen that by further selecting an appropriate laser pulse width, more ligament surfaces can have a laser ablation heat-affected zone, and metal grains in the laser ablation heat-affected zone can be melted and recrystallized to form smaller-sized metal grains, thereby better improving the cycling performance of the battery.

From the test results of Examples 2-1, 2-7, and 2-8, it can be seen that by further selecting an appropriate laser defocus amount, more ligament surfaces can have a laser ablation heat-affected zone, and metal grains in the laser ablation heat-affected zone can be melted and recrystallized to form smaller-sized metal grains, thereby better improving the cycling performance of the battery.

From the test results of Examples 2-1 and 2-2, it can be seen that the formation of pits on the copper foam surface can enable the battery to have better cycling performance. This is because when pits are formed on the copper foam surface, the specific surface area of the copper foam is larger, and the electrochemically active area is also larger.

It should be noted that the present application is not limited to the above embodiments. The above embodiments are merely examples, and embodiments having substantially the same configuration and achieving the same effects as the technical idea within the scope of the technical solutions of the present application are included in the technical scope of the present application. Additionally, without departing from the gist of the present application, various modifications that can be conceived by those skilled in the art and other configurations constructed by combining some constituent elements of the embodiments are also included in the scope of the present application.

## Claims

1. A preparation method for a negative electrode current collector, comprising the following steps:
providing a metal substrate, wherein the metal substrate is a two-dimensional metal structure or a three-dimensional porous metal structure; and
irradiating at least part of the surface of the metal substrate with a laser, causing metal grains in a laser ablation heat-affected zone of the metal substrate to melt and recrystallize to form smaller-sized metal grains, thereby obtaining the negative electrode current collector.

2. The preparation method according to claim 1, wherein a laser device for generating the laser is a pulsed laser device, the wavelength of the pulsed laser device is 694 nm to 1070 nm, the average power of the laser is 30 W to 90 W, the pulse repetition frequency of the laser is 30 KHz to 90 KHz, and the pulse width of the laser is 20 ns to 120 ns.

3. The preparation method according to claim 2, wherein the pulse energy of the pulsed laser device is 1 mJ.

4. The preparation method according to claim 2 or 3, wherein the pulsed laser device comprises one or more of a ruby laser device, a fiber laser device, a glass laser device, or a YAG laser device.

5. The preparation method according to any one of claims 2 to 4, wherein the wavelength of the pulsed laser device is 1050 nm to 1070 nm.

6. The preparation method according to any one of claims 2 to 5, wherein the traverse speed of the laser is 1000 mm/s to 3500 mm/s.

7. The preparation method according to any one of claims 2 to 6, wherein an initial size of the metal grains of the metal substrate is greater than 100 nm; and/or a size of the metal grains formed by recrystallization in the laser ablation heat-affected zone of the metal substrate is 10 nm to 100 nm.

8. The preparation method according to any one of claims 2 to 7, wherein the metal substrate is a two-dimensional metal structure, and the two-dimensional metal structure has a thickness H1 of 5 µm to 12 µm.

9. The preparation method according to claim 8, wherein the two-dimensional metal structure is a two-dimensional copper foil, a two-dimensional copper alloy foil, a two-dimensional nickel foil, or a two-dimensional nickel alloy foil.

10. The preparation method according to claim 8 or 9, wherein the average power of the laser is 30 W to 80 W; and/or the pulse repetition frequency of the laser is 30 KHz to 80 KHz; and/or the pulse width of the laser is 40 ns to 120 ns; and/or the defocus amount of the laser is -120 µm to 20 µm.

11. The preparation method according to claim 10, wherein the average power of the laser is 40 W to 80 W; and/or the pulse repetition frequency of the laser is 40 KHz to 80 KHz; and/or the pulse width of the laser is 60 ns to 120 ns; and/or the defocus amount of the laser is -(H1 × 70%) µm to 0.

12. The preparation method according to any one of claims 2 to 7, wherein the metal substrate is a three-dimensional porous metal structure, and the three-dimensional porous metal structure has a thickness H2 of 80 µm to 1000 µm.

13. The preparation method according to claim 12, wherein the three-dimensional porous metal structure is mesh copper, mesh nickel, copper foam, or nickel foam.

14. The preparation method according to claim 12 or 13, wherein the average power of the laser is 40 W to 90 W; and/or the pulse repetition frequency of the laser is 40 KHz to 90 KHz; and/or the pulse width of the laser is 40 ns to 120 ns; and/or the defocus amount of the laser is -(H2 × 100%) µm to 0.

15. The preparation method according to claim 14, wherein the average power of the laser is 60 W to 90 W; and/or the pulse repetition frequency of the laser is 60 KHz to 90 KHz; and/or the pulse width of the laser is 60 ns to 120 ns; and/or the defocus amount of the laser is -(H2 × 70%) µm to -(H2 × 50%) µm.

16. The preparation method according to any one of claims 1 to 15, wherein the microstructure morphology of the surface of the negative electrode current collector comprises one or more of surface ablation without pore formation, pits, bowl-shaped pores, through-holes, or grooves.

17. The preparation method according to any one of claims 1 to 16, wherein before irradiating the surface of the metal substrate with a laser, the method further comprises the step of: cleaning oil, impurities, and/or oxide layers on the surface of the metal substrate.

18. A negative electrode current collector, wherein the negative electrode current collector comprises a laser ablation heat-affected zone and a non-laser ablation heat-affected zone, and metal grains in the laser ablation heat-affected zone have a size less than that of metal grains in the non-laser ablation heat-affected zone.

19. The negative electrode current collector according to claim 18, wherein the metal grains in the laser ablation heat-affected zone have a size of 10 nm to 100 nm; and/or the metal grains in the non-laser ablation heat-affected zone have a size greater than 100 nm.

20. The negative electrode current collector according to claim 18 or 19, wherein the microstructure morphology of the surface of the negative electrode current collector comprises one or more of surface ablation without pore formation, pits, bowl-shaped pores, through-holes, or grooves.

21. The negative electrode current collector according to claim 18, wherein the negative electrode current collector is prepared by the preparation method according to any one of claims 1 to 17.

22. A battery cell comprising a negative electrode current collector prepared by the preparation method according to any one of claims 1 to 17 or the negative electrode current collector according to any one of claims 18 to 21, wherein the battery cell comprises at least one of a negative electrode-free lithium metal battery cell and a negative electrode-free sodium metal battery cell.

23. A battery comprising the battery cell according to claim 22.

24. An electric apparatus comprising the battery according to claim 23, wherein the battery is used to supply electrical energy.
